Europäisches Patentamt

European Patent Office

Office européen des brevets

(19)

(11) EP 0 827 660 B1

(12) **FASCICULE DE BREVET EUROPEEN**

(45) Date de publication et mention
de la délivrance du brevet:
**19.09.2001   Bulletin 2001/38**

(21) Numéro de dépôt: **97906238.7**

(22) Date de dépôt: **21.02.1997**

(51) Int Cl.7: **H04L 12/56**

(86) Numéro de dépôt international:
**PCT/FR97/00321**

(87) Numéro de publication internationale:
**WO 97/31456 (28.08.1997 Gazette 1997/37)**

(54) **PROCEDE DE RENEGOCIATION EN COURS DE COMMUNICATION DES PARAMETRES D'UN CONTRAT DE TRAFIC D'UN RESEAU ATM**

VERFAHREN ZUR WIEDERVERHANDLUNG DER VEREINBARTEN VERKEHRSPARAMETER WÄHREND EINER VERBINDUNG IN EINEM ATM-NETZ

METHOD FOR RENEGOTIATING ATM NETWORK TRAFFIC AGREEMENT PARAMETERS DURING COMMUNICATION

(84) Etats contractants désignés:
**DE GB**

(30) Priorité:  **23.02.1996  FR 9602519**

(43) Date de publication de la demande:
**11.03.1998   Bulletin 1998/11**

(73) Titulaire: **FRANCE TELECOM exploitant public
75015 Paris (FR)**

(72) Inventeurs:
 • **BENGIO, Samy
   Montréal HZ5 ZE6 (CA)**
 • **CLEROT, Fabrice
   F-22700 Louannec (FR)**
 • **GRAVEY, Annie
   F-22300 Lannion (FR)**
 • **COLLOBERT, Daniel
   F-22300 Ploulec'h (FR)**

(74) Mandataire: **Maillet, Alain
   SCP Le Guen & Maillet,
   5, Place Newquay,
   B.P. 70250
   35802 Dinard Cedex (FR)**

(56) Documents cités:
**EP-A- 0 522 391**

 • **COMPUTER NETWORKS AND ISDN SYSTEMS,
   vol. 24, no. 4, 15 Mai 1992, pages 321-334,
   XP000264212 BOYER P E ET AL: "A
   RESERVATION PRINCIPLE WITH
   APPLICATIONS TO THE ATM TRAFFIC
   CONTROL"**
 • **INTERNATIONAL CONFERENCE ON
   COMMUNICATIONS, INCLUDING SUPERCOMM
   TECHNICAL SESSIONS. ATLANTA, APR. 15 - 19,
   1990, vol. 2 OF 4, 15 Avril 1990, INSTITUTE OF
   ELECTRICAL AND ELECTRONICS ENGINEERS,
   pages 439-442, XP000169724 WEILIN WANG ET
   AL: "BANDWIDTH ALLOCATION FOR ATM
   NETWORKS"**
 • **IEEE COMMUNICATIONS MAGAZINE, vol. 33,
   no. 10, 1 Octobre 1995, pages 50-56,
   XP000545273 NEVERS J E: "NEURAL
   NETWORKS IN B-ISDN FLOW CONTROL: ATM
   TRAFFIC PREDICTION OR NETWORK
   MODELING?"**

## Description

La présente invention concerne un procédé de renégociation en cours de communication des paramètres d'un contrat de trafic d'un réseau ATM.

Un réseau ATM (Asynchronous Transfer Mode) est un réseau dont la transmission des informations est fondée sur le multiplexage temporel asynchrone de paquets d'informations, appelés cellules, de longueur fixe. Il est possible de transporter sur un tel réseau un service quelconque, tel qu'un service audio, vidéo ou de transmission de données, indépendamment des caractéristiques intrinsèques de celui-ci, comme par exemple le débit binaire, ses caractéristiques de qualité ou sa nature sporadique. C'est pour ces raisons que cette technique de transfert des cellules par multiplexage temporel asynchrone a été retenue comme mode de transfert des réseaux numériques à intégration de services à large bande dits réseaux BISDN.

Néanmoins, pour garantir la qualité de service et fournir la bande passante demandée par les applications, il s'est avéré nécessaire de prévoir divers contrôles. Ceci se révèle particulièrement vrai pour les trafics à débits très sporadiques comme ceux qui sont engendrés par l'interconnexion de réseaux locaux.

Ces contrôles concernent, d'une part, les contrôles des paramètres du réseau ou les contrôles des paramètres d'utilisation qui visent l'ensemble des actions menées par le réseau pour surveiller et contrôler le trafic sur une connexion ATM. L'invention n'est pas concernée par ce type de contrôles. Ils concernent, d'autre part, le contrôle d'admission d'une connexion lequel vise à accepter ou refuser une connexion, lors de la demande de son établissement, selon que la quantité de ressources disponibles permet ou ne permet pas de transporter la nouvelle connexion au travers du réseau entier avec la qualité de service requise.

Ainsi, lors de l'établissement d'une connexion, il est passé entre l'utilisateur et le réseau un contrat de trafic qui est constitué, d'une part, d'un descripteur de trafic de la connexion concernée et, d'autre part, de la classe de qualité de service QoS requise. Ces informations sont fournies par l'utilisateur, au moment de l'établissement de la connexion, par exemple au moyen de la signalisation.

Le descripteur du trafic de la connexion en cours d'établissement peut comprendre les quatre paramètres de trafic suivants: le débit de cellules maximal ou débit-crête (PCR, Peak Cell Rate), la tolérance de la variation du délai des cellules ou tolérance de gigue to$_{PCR}$, et éventuellement le débit cellulaire projeté (SCR, Sustainable Cell Rate) et sa tolérance associée to$_{SCR}$.

Par le contrat souscrit, l'utilisateur s'oblige à ce que le trafic qu'il émet soit conforme à celui qui est défini par les paramètres du contrat alors que le réseau assure un respect du débit et de la tolérance de gigue dès lors que cette conformité est réalisée. L'obligation pour les trafics d'être conformes à leur contrat protège ainsi le réseau contre l'arrivée de rafales de volume incontrôlé et permet de réserver dans le réseau les ressources qui lui sont nécessaires pour garantir la qualité de service demandée.

A partir des paramètres de trafic mentionnés ci-dessus, il a été proposé quatre définitions de contrat de trafic qui sont respectivement dénommées mode à débit de bits déterministe DBR (Deterministic Bit Rate), mode à débit de bits statistique SBR (Statistical Bit Rate), mode à transfert de blocs ATM ABT (ATM Block Transfer) et mode à débit de bits disponible ABR (Available Bit Rate). Une revue de ces quatre définitions est effectuée dans l'article de J. Mignault, A. Gravey and C. Rosenberg intitulé "A survey of straightforward multiplexing models for ATM networks" in ATM Expert RACE Symposium, 1995. Elles font également l'objet de la recommandation I.371 de l'ITU-T.

Dans le mode DBR, la source ou utilisateur déclare, au moment de la connexion, simplement le débit de cellules maximal PCR qu'il entend respecter pendant toute la durée de la communication. La réservation des ressources du réseau se fait alors sur la base de ce débit maximal tandis que les garanties de qualité QoS sont données en termes de délai et de débit de perte de cellules. Ce mode est essentiellement destiné à des connexions à débit de bits constant (CBR, Constant Bit Rate).

Pour des connexions qui prennent en charge des services à débit de bits variable VBR (Variable Bit Rate), la source ou utilisateur peut déclarer, dans le mode dit SBR, un débit soutenu SCR (Sustainable Cell Rate) en plus du débit de crête PCR.

A partir des paramètres de trafic négociés lors du contrat, il est possible d'estimer une bande passante équivalente du trafic de la connexion concernée en fonction du débit des liens, des ressources disponibles dans le réseau et de la qualité de service requise. La réservation de ressources se fait donc dans le réseau sur la base de cette bande passante estimée.

Le mode ABT vise à protéger la qualité de service au niveau des trames plutôt qu'au niveau des cellules. Dans ce mode, la source négocie pour la durée de l'appel un débit-crête maximal PCR$_{max}$ et utilise une négociation dans la bande. La réservation des ressources se fait alors sur la base de la plus petite des valeurs débit-crête PCR et débit-crête maximum PCR$_{max}$.

Quant au mode ABR, il est destiné aux sources de données.

La conformité d'une cellule au contrat de trafic passé par l'utilisateur est définie au moyen d'un algorithme tel que l'algorithme du "baquet troué" (LB, Leaky Bucket) ou, son équivalent, l'algorithme VS (Virtual Scheduling).

Dans le mode DBR, le trafic d'une connexion est conforme, selon ces algorithmes, tant que la longueur d'une file d'attente virtuelle nourrie par le trafic de la connexion considérée et vidée au débit-crête négocié PCR n'excède pas une longueur maximale L$_{max}$ définie

à partir de la tolérance de gigue déclarée $to_{pcr}$ au moyen de la relation suivante:

$$L_{max} = PCR \times to_{pcr}.$$

Dans le mode SBR, la définition algorithmique du débit soutenu SCR est analogue à celle du débit-crête PCR, si ce n'est qu'il est associé à une plus grande tolérance de gigue $to_{scr}$.

Ces contrats de trafic sont généralement définis pour toute la durée de la communication, ce qui rend difficile l'utilisation optimale des ressources du réseau, surtout dans le cas de trafics sporadiques qui sont mal définis en terme de bande passante sur toute la durée d'une communication. Les paramètres de trafic sont donc en définitive difficiles à définir sur toute la durée d'une communication. Il en résulte que les réservations de ressources pour un débit-crête qui sont valables pour toute la durée de la communication provoquent inévitablement un gaspillage de ressources calculé en termes de bande passante.

Le but de l'invention est de prévoir la renégociation des paramètres des contrats de trafic dynamiquement au cours de la communication établie.

Dans l'article intitulé "A reservation principle with applications to the ATM traffic control" paru dans COMPUTER NETWORKS AND ISDN SYSTEMS, vol. 24, no.4, du 15 mai 1992, Boyer P.E. and all décrivent une procédure de réservation de débit dans laquelle une unité de contrôle FRP (Fast Reservation Protocol) reçoit du gestionnaire de trafic d'un réseau une cellule de demande de réservation (Réservation Requested Cell), essaie de réserver le débit correspondant à cette demande, et renvoie une cellule d'acceptation de débit (Réservation Accepted Cell) ou au contraire de refus (Réservation Denied Cell) selon le cas. Ce procédé de réservation de débit sous requête peut avoir lieu au moment de l'appel ou en cours de communication pour modification, voire en cours de communication un moment en avance lorsque le demandeur du réseau sait qu'à une heure donnée il aura un pic de débit à transmettre.

Dans ce document, la base de la réservation est une requête du réseau demandeur. Or, le but de la présente invention est de proposer que la base de cette renégociation soit le trafic lui-même, ce qui pose le problème de la prédiction des besoins de la source pour la durée de validité du ou des contrats à venir.

Dans un article paru dans Computer Communications, vol.18 du 8 août 1995 et intitulé "Traffic prediction and dynamic bandwidth allocation over ATM: a neural network approach", Moh and all décrivent l'utilisation de réseaux de neurones pour prédire la bande passante qui sera requise au moment de la renégociation et l'allocation de la bande passante prédite. Or, dans cet article, il n'est pas tenu compte du fait que la renégociation porte non pas sur la bande passante mais sur les paramètres de trafic évoqués ci-dessus.

Le but de l'invention est donc de prévoir la renégociation des paramètres des contrats de trafic dynamiquement au cours de la communication établie en tenant compte du fait que cette renégociation porte sur les paramètres de trafic.

Pour atteindre ces buts, l'invention propose un procédé de renégociation, conformément aux caractéristiques de la revendication 1.

Un procédé de renégociation, en cours d'une communication sur un réseau ATM, des paramètres du contrat de trafic concernant ladite communication selon l'invention consiste:

a) à prédire, pour une période de temps prédéterminée entre deux renégociations successives, la longueur maximale qu'atteindrait une file virtuelle nourrie par le trafic de ladite communication pour au moins un débit de sortie donné de ladite file,
b) à déduire de ladite longueur maximale un ou de nouveaux paramètres du contrat de trafic, et
c) à renégocier avec le réseau sur la base dudit ou desdits paramètres de trafic pour ladite période de temps.

Selon une variante avantageuse, il consiste:

a) à prédire, pour une période de temps prédéterminée entre deux renégociations successives, l'ensemble des valeurs maximales de longueur qu'atteindrait une file virtuelle nourrie par le trafic de ladite communication pour un ensemble de valeurs constantes de débit de sortie de ladite file,
b) à déduire desdites valeurs de longueur de file et desdites valeurs de débit correspondant, un ou de nouveaux paramètres du contrat de trafic, et
c) à renégocier avec le réseau sur la base dudit ou desdits paramètres de trafic pour ladite période de temps.

Selon une autre caractéristique de l'invention, ladite étape de déduction de l'étape b) de nouveaux paramètres de contrat de trafic est réalisée en fonction de valeurs déclarées de tolérances de gigue sur le trafic dans le contrat de trafic avec le

Ainsi, la renégociation de l'étape c) peut être effectuée dans un mode où le seul paramètre de contrat de trafic à renégocier est le débit-crête de cellules PCR. Pour la déduction de l'étape b), ledit débit-crête est alors déterminé à l'aide de la relation suivante:

$$L_{max} (PCR) = to_{PCR} \times PCR$$

dans laquelle $to_{PCR}$ représente la tolérance gigue dans ledit mode et $L_{max} (PCR)$ la valeur maximale prédite de la longueur de ladite file virtuelle pour la valeur du débit de sortie égale à PCR.

La renégociation de l'étape c) peut également être effectuée dans un mode où les paramètres de contrat de trafic sont, d'une part, le débit-crête de cellules PCR et, d'autre part, le débit projeté de cellules SCR. Dans ce cas, pour la déduction de l'étape b), ledit débit-crête est déterminé à l'aide de la relation suivante:

$$L_{max}(PCR) = to_{PCR} \times PCR$$

et ledit débit projeté à l'aide de la relation suivante:

$$L_{max}(SCR) = to_{SCR} \times SCR$$

dans lesquelles $to_{PCR}$ représente la tolérance gigue pour ledit débit PCR dans ledit mode, $to_{SCR}$ représente la tolérance gigue pour ledit débit SCR dans ledit mode, $L_{max}(PCR)$ la valeur maximale prédite de la longueur de ladite file virtuelle pour la valeur du débit de sortie égale à PCR et $L_{max}(SCR)$ la valeur maximale prédite de la longueur de ladite file virtuelle pour la valeur du débit de sortie égale à SCR.

La renégociation de l'étape c) peut encore être effectuée dans un mode où les paramètres de contrat de trafic comportent le débit-crête PCR et le débit-crête maximal $PCR_{max}$, la plus petite valeur entre les deux valeurs desdits débits servant de base à ladite renégociation.

Ladite étape a) de prédiction peut être mise en oeuvre à partir de la valeur prise par la longueur de la file virtuelle au moment de la renégociation, de la valeur prise par le débit en sortie de ladite file dans la période qui précède le moment de la renégociation et d'informations qui caractérisent le trafic dans au moins la période qui précède le moment de la renégociation.

Ces informations caractérisant le trafic sont par exemple obtenues en prenant en compte un nombre prédéterminé d'intervalles de temps consécutifs précèdant le moment de la renégociation et en déterminant, à l'intérieur de chaque intervalle de temps, la valeur prise par au moins une grandeur caractéristique du trafic, l'ensemble desdites valeurs ainsi obtenues formant lesdites informations.

Dans une variante de réalisation, on considère la série temporelle qui est formée par l'ensemble des valeurs prises par la ou lesdites grandeurs caractéristiques du trafic dans lesdits intervalles de temps et on détermine les premiers moments de ladite série temporelle, lesdits moments formant alors lesdites informations caractérisant le trafic. Lesdits moments de ladite série temporelle qui sont utilisés sont par exemple la moyenne et la variance.

Ladite ou lesdites grandeurs caractéristiques du trafic peuvent être ou peuvent comprendre le nombre de bits ou de cellules du trafic dans chaque intervalle de temps. Elles peuvent également être ou comprendre le temps d'arrivée entre deux cellules consécutives du trafic.

Pour l'étape de prédiction, on utilise avantageusement un réseau de neurones qui comporte une cellule d'apprentissage destinée à lui fournir les poids de chacun de ses neurones après détermination desdits poids, ladite détermination étant effectuée sur une durée prédéterminée à partir du trafic de la connexion concernée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

les Figs. 1a et 1b sont des schémas synoptiques illustrant des modes différents de mise en oeuvre d'un procédé de renégociation selon l'invention,
la Fig. 2 est une courbe montrant l'évolution en fonction du temps de la longueur d'une file nourrie par le trafic,
la Fig. 3 est une courbe illustrant la détermination des paramètres de trafic,
la Fig. 4 est un graphe montrant deux courbes respectivement obtenues par mise en oeuvre d'un procédé selon l'invention et d'un procédé avec "oracle", ces courbes étant obtenues pour une renégociation en mode DBR,
les Figs. 5a et 5b sont des courbes tracées dans des conditions semblables à celles de la Fig. 4 mais pour une renégociation en mode SBR, et
la Fig. 6 est un tableau qui illustre l'intérêt de la renégociation en cours de communication.

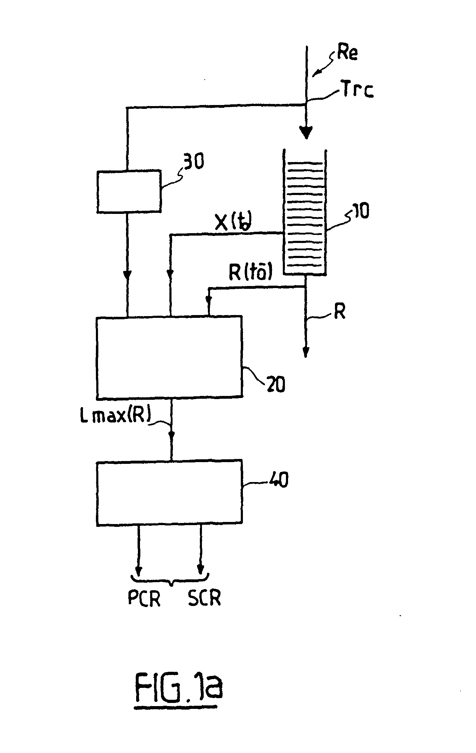

On a représenté à la Fig. 1a un schéma synoptique illustrant le procédé de l'invention. Sur cette Fig. 1a, on peut voir une file d'attente virtuelle 10 correspondant à un algorithme de "baquet troué" ou Leaky Bucket qui est alimenté par le trafic Trc de la connexion en cours de traitement et dont le débit de sortie est R.

Dans un mode de réalisation de l'invention, la longueur de la file 10 n'est pas bornée supérieurement. Ainsi, aucune cellule n'est supprimée par débordement de cette file.

Dans la suite de la description, on appellera le temps $t_0$ le temps où a lieu chaque renégociation des paramètres de trafic et ce pour la période qui s'étend donc de $t_0$ à $t_0 + T$, où T est la période de temps entre deux renégociations successives. Cette période T est par exemple de dix secondes.

A l'instant $t_0$ de la renégociation, la file 10 délivre la valeur de la longueur de file $X(t_0)$ ainsi que la valeur du débit de sortie $R(t_0^-)$. La valeur $R(t_0^-)$ est la valeur du débit en sortie de la file 10 à l'instant $t_0$ mais avant que la renégociation ait eu lieu.

Les deux valeurs $X(t_0)$ et $R(t_0^-)$ sont fournies aux deux entrées correspondantes d'un prédicteur 20 dont une troisième entrée reçoit une information qui caractérise le trafic antérieurement à l'instant $t_0$ et qui est fournie par un élément 30. Pour pouvoir délivrer cette information, l'élément 30 reçoit sur son entrée le trafic Trc de la connexion en cours de traitement.

Selon un mode de réalisation de l'invention, pour réaliser la fonction de l'élément 30, on découpe temporellement chaque intervalle de temps [$t_0$, $t_0$ + T] entre deux négociations successives, en plusieurs sous-intervalles de temps consécutifs égaux et on détermine, pour chacun desdits sous-intervalles de temps, la valeur prise par au moins une grandeur caractéristique du traffic Trc, comme par exemple le nombre de bits de ce trafic N, le temps d'arrivée $\underline{t}$ entre deux cellules, etc. Si on appelle G la valeur prise par cette grandeur ou cette association de grandeurs (G = {N, $\underline{t}$,..., }), on obtient ainsi une série temporelle S du trafic Trc qui est égale à {G(1), G(2), ..., G(i), ..., G(n)} où les indices i = 1 à n représente les numéros d'ordre des sous-intervalles de temps.

A titre d'exemple, on a découpé chaque intervalle de temps de 10 secondes en cent sous-intervalles de temps et on a considéré comme grandeur caractéristique du trafic, le nombre de bits dans chacun de ces sous-intervalles de temps.

Dans un premier mode de réalisation de l'invention, on fournit alors directement la série temporelle S au prédicteur 20.

Dans un seconde mode de réalisation, plutôt que de délivrer la série temporelle S, on délivre seulement les deux premiers moments de la série temporelle, à savoir la moyenne et la variance. cette solution est avantageuse par rapport à la précédente car elle limite le nombre d'entrées du prédicteur 20, et donc sa complexité.

Dans d'autres modes de réalisation, on délivre en plus des deux premiers moments de la série temporelle S, les moments d'ordre supérieur.

La sortie du prédicteur 20 délivre un ensemble de valeurs prédites $L_{max}$ (R) de la longueur maximale qu'atteindrait la file 10 si elle était vidée à différentes valeurs constantes de son débit de sortie R pendant la période [$t_0$, $t_0$ + T] qui suit l'instant $t_0$.

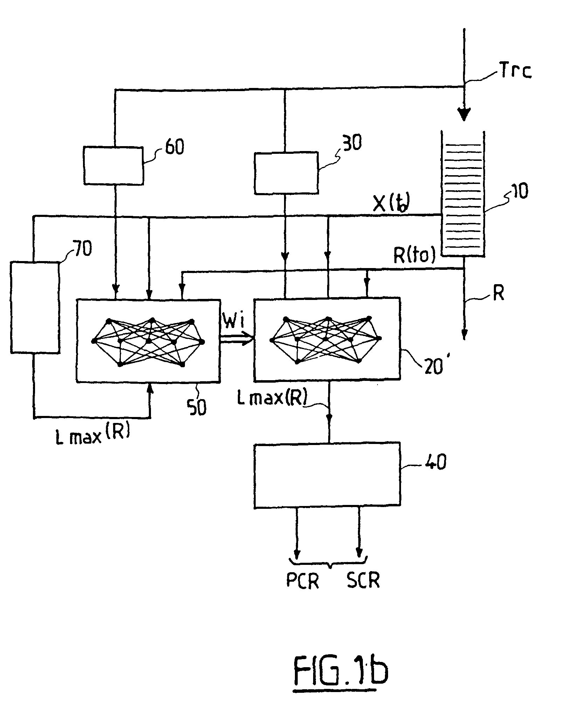

La Fig. 1c illustre un procédé selon l'invention semblable à celui qui est décrit en relation avec les Figs. 1a et 1b mais dont le prédicteur est un réseau de neurones 20', par exemple du type Perceptron multicouche, en particulier à trois couches: une couche d'entrée, une couche cachée et une couche de sortie reliées, de manière connue en soi, par des synapses. Ce réseau de neurones comporte trois entrées, une unique sortie et le nombre de neurones sur la couche cachée peut varier entre 5 et 10.

Pour son apprentissage, le réseau de neurones 20' comporte une cellule d'apprentissage 50 à trois entrées recevant respectivement le débit R($t_0^-$) à l'instant $t_0^-$, la longueur X($t_0$) de la file 10 à l'instant $t_0$ et une information qui caractérise le trafic antérieurement à l'instant $t_0$ et qui est fournie par un élément 60 identique à l'élément 30. Pour pouvoir délivrer cette information, l'élément 60 reçoit sur son entrée le trafic Trc de la connexion en cours de traitement. Il comporte encore un élément de calcul 70 de la longueur maximale $L_{max}$ (R) de la file 10 en fonction du débit R. Cet élément de calcul 70 est relié à la cellule d'apprentissage 50.

La cellule d'apprentissage 50 est par exemple mise en oeuvre dans un algorithme d'apprentissage par rétropropagation de l'erreur.

La cellule d'apprentissage 50 détermine, après réception des éléments qui lui sont fournis à ses entrées, à chaque instant $t_0$ et ce pendant une durée prédéterminée, les poids $w_i$ de chaque neurone du réseau de neurones 20' et les déchargera dans le réseau 20' après cette durée prédéterminée. Il s'agit là de l'opération d'apprentissage.

Cette opération de l'estimation des poids du réseau par apprentissage peut être très longue, le problème étant NP-complet. Mais, on sait toutefois trouver des paramètres suboptimaux dans des temps polymoniaux.

On notera que l'opération d'apprentissage est menée sur le trafic Trc, mais pas en temps réel.

L'ensemble de valeurs prédites $L_{max}$ (R) qui est délivré par le prédicteur 20 ou le réseau de neurones 20' est fourni à une unité de détermination des paramètres de trafic 40 qui, en fonction des paramètres fixés au moment de l'établissement de la connexion que sont respectivement la tolérance de gigue déclarée $to_{PCR}$ et la tolérance de gigue projetée $to_{SCR}$ définissant la qualité de la connexion QoS, délivre les valeurs des paramètres qui feront l'objet de la renégociation du contrat de trafic pour la période s'étendant de $t_0$ à $t_0$ + T. Ces paramètres de contrat sont respectivement le débit-crête PCR en mode à débit de bits déterministe DBR, et, en mode à débit de bits statistique SBR, le débit-crête PCR et le débit projeté SCR. En mode à transfert de blocs ATM ABT, s'ajoute également le débit-crête maximum $PCR_{max}$.

On notera que dans le mode ABT, la période de renégociation du paramètre de trafic PCR est plus courte que celle du paramètre $PCR_{max}$. Par exemple, si la période est de dix secondes pour la détermination du paramètre $PCR_{max}$, elle n'est que d'une seconde pour la détermination du paramètre PCR. On rappelle que la renégociation se fait sur la plus petite des deux valeurs, soit min(PCR, $PCR_{max}$).

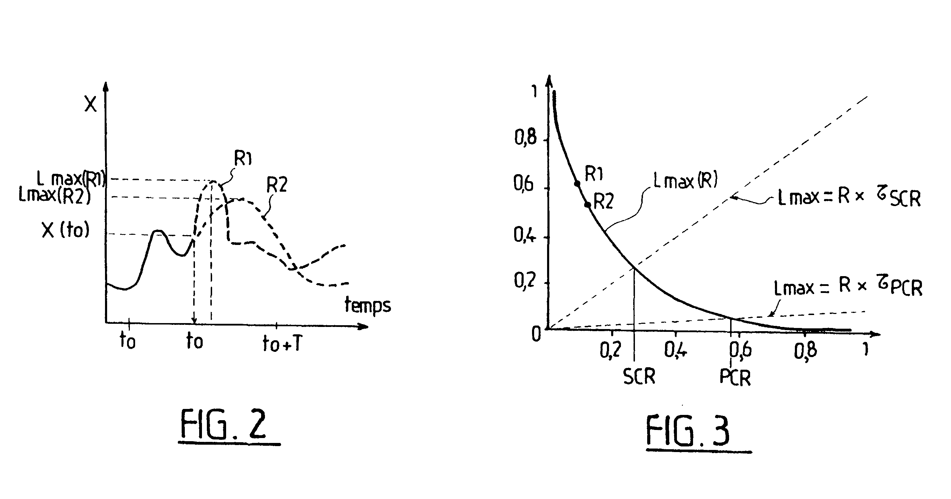

On va illustrer Figs. 2 et 3 l'étape du procédé de l'invention mis en oeuvre par l'unité 30.

A la Fig. 2, on voit la courbe représentative de la variation de la longueur X de la file 10 en fonction du temps. Jusqu'à l'instant $t_0$ de la renégociation, la courbe est en trait fort pour montrer que c'est la longueur telle qu'elle a été qui est représentée. Après l'instant $t_0$, la courbe se subdivise en deux courbes pour deux débits en sortie de la file 10 prenant respectivement les valeurs constantes R1 et R2. Ces deux parties de courbe sont tracées en pointillés pour montrer qu'il s'agit de la longueur de la file telle qu'elle serait effectivement après le temps $t_0$ pour respectivement des débits de sortie R1 et R2. Ainsi, l'observateur est placé à l'instant $t_0$. Le prédicteur 20 ou 20' quant à lui peut prédire pour chaque débit R les longueurs de file maximales $L_{max}$ (R). On a représenté les longueurs de file maximales $L_{max}$ (R1) et $L_{max}$ (R2) prédites.

Sur la Fig. 3, est représentée une courbe montrant la longueur de la file maximale $L_{max}$ (R) que devrait atteindre la file 10 pendant la période $t_0$ + T, et ce en fonction du débit R en sortie de la file 10. On a placé, à titre d'exemple, les points correspondant aux débits R1 et R2 de la Fig. 2.

Les valeurs du débit-crête PCR et du débit projeté SCR sont les valeurs respectivement prises par le débit à l'intersection de la courbe représentative de la fonction $L_{max}$ (R) avec, d'une part, la droite d'équation $L_{max}$ = R x $to_{pcr}$ et, d'autre part, la droite d'équation $L_{max}$ = R x $to_{scr}$. Ainsi, la valeur du débit-crête PCR est la valeur de R qui vérifie la relation:

$$L_{max} (R) = R \times to_{pcr}. \qquad (1)$$

De même, la valeur du débit-crête SCR est la valeur de R qui vérifie la relation:

$$L_{max} (R) = R \times to_{scr}. \qquad (2)$$

Comme on peut le constater, ces valeurs de PCR et SCR assurent au réseau que la connexion sera conforme au contrat de trafic puisque cette conformité est précisément définie par les relations (1) et (2) ci-dessus.

Ce qui suppose néanmoins que la prédiction soit correcte. On montrera dans la suite de la description qu'elle l'est effectivement.

On donne ci-dessous des résultats de simulation de renégociation de contrats de trafic qui mettent en oeuvre le procédé selon l'invention. Ces simulations ont été menées à partir d'une trace de trafic réel consistant en un enregistrement de deux heures du trafic TCP à la passerelle de Lawrence Berkeley Laboratory vers le réseau Internet. Cette trace a fait l'objet d'une étude publiée dans la revue Proc.Sigcomm'94, Computer Communication Review, 24 (1994) aux pages 257-268 dans un article intitulé "Wide area traffic: the failure of Poisson modelling" de V.Paxson and S. Floyd. Cette trace a été choisie pour la raison qu'elle est bien représentative du trafic auquel on doit s'attendre dans le cadre de l'interconnexion de réseaux locaux.

On a utilisé les paramètres de gigue, pour l'algorithme d'espacement virtuel suivants: $to_{PCR}$ = 0,1 s et $to_{SCR}$ = 1 s.

Dans le cas du mode à débit de bits déterministe DBR, le débit-crête de cellules PCR est prédit, à chaque temps $t_0$, pour la prochaine période d'une durée de 10 s. Comme déjà mentionné, la réservation des ressources au moment de la renégociation est effectuée sur la base de ce débit-crête PCR. Dans la suite de la description, ce contrat renégocié sera appelé DBR-10s.

Dans le mode ABT, le débit-crête maximum $PCR_{max}$ est prédit pour la prochaine période de 10 s alors que le débit-crête PCR est prédit toutes les secondes. La réservation est faite sur la base de la plus petite valeur entre PCR et de PCRmax. On appellera ce contrat ABT-10s.

Dans le mode à débit de bits statistique SBR, le débit-crête PCR et le débit soutenu SCR sont prédits, à chaque temps $t_0$, pour la prochaine période de 10 s. En considérant un taux de perte de cellules admissible CLR de $10^{-9}$, une taille de la file B de 1 Mbit et un débit de lien $R_{max}$ de 155 Mbits/s, on déduit, par calcul, à partir des débits PCR et SCR, la bande équivalente et la réservation est faite sur la base de cette bande. On appellera ce contrat SBR-10s.

Dans la suite de la description, dans chacun des modes mentionnés ci-dessus, on compare les performances du procédé de l'invention avec la prédiction effectuée par le prédicteur 20 ou 20' avec celles d'un "oracle" qui met en oeuvre le même procédé à l'exception de la détermination de la longueur $L_{max}$(R) qui n'est pas prédite mais obtenue à partir des données réelles des prochaines périodes qu'il a donc déjà reçues.

On a représenté à la Fig. 4 deux courbes, sur un même graphe, montrant respectivement les évolutions en fonction du temps des débits exprimés en Mégabits par seconde avec une renégociation en mode DBR effectuée, d'une part en trait fort, selon le procédé de l'invention avec prédiction à dix secondes et, d'autre part en pointillés, avec "l'oracle" fonctionnant avec les données réelles. Cette courbe a été tracée dans une partie de la trace mentionnée ci-dessus qui est la plus sporadique.

Comme on peut le constater, les valeurs de débits atteintes et les dynamiques de courbes respectivement obtenues avec prédiction et avec l'oracle sont, bien que différant ponctuellement, très proches. On peut donc conclure qu'il est possible de faire, à un horizon de 10 secondes, des prédictions suffisamment précises pour renégocier un contrat de type DBR.

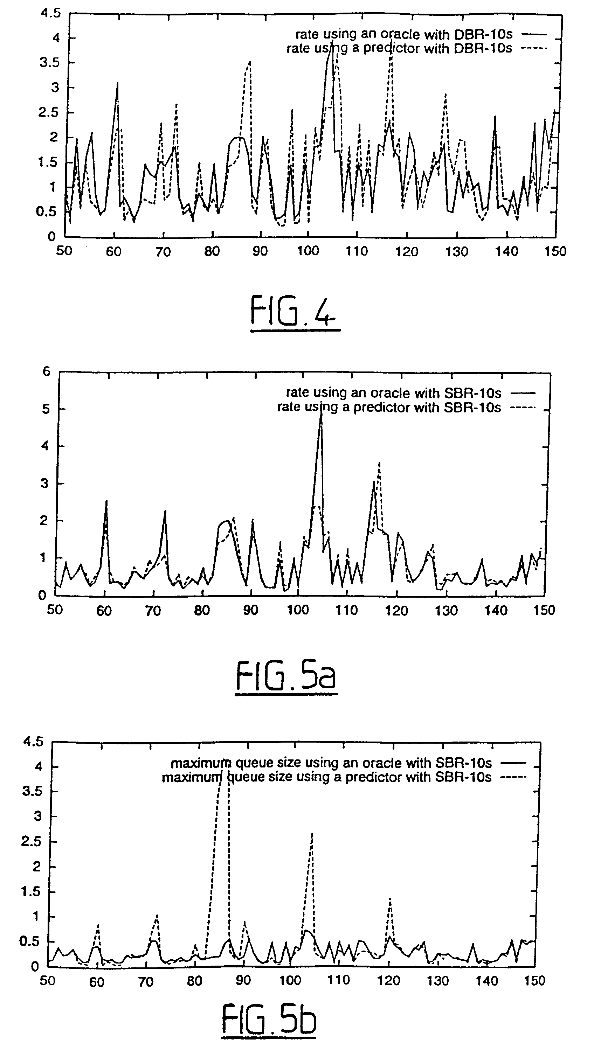

On a représenté à la Fig. 5a deux courbes, l'une en trait fort et l'autre en pointillé, similaires aux deux courbes de la Fig. 4 mais pour une renégociation en mode SBR, et ce pour la même partie de la même trace. La Fig. 5b montre également les deux courbes correspondantes des évolutions de la longueur de la file virtuelle en fonction du temps respectivement avec prédiction et avec l'oracle.

On peut constater que le procédé avec prédiction obtient d'excellents résultats en ce qui concerne les valeurs moyennes mais que ces résultats sont un peu moins bons pour ce qui est des valeurs maximales prises. On remarquera cependant que les dynamiques des bandes équivalentes obtenues avec l'oracle et le prédicteur sont néammoins très proches. On peut donc conclure qu'on peut effectivement faire à un horizon de 10 s des prédictions suffisamment précises pour renégocier un contrat dans le mode SBR.

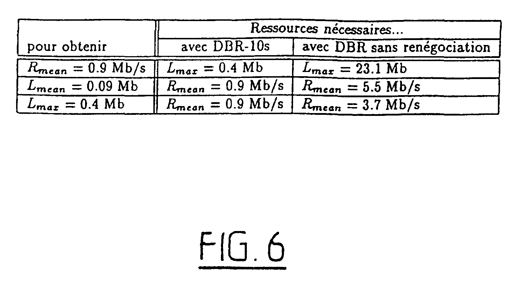

La Fig. 6 montre un tableau répertoriant, d'une part, dans un mode dit DBR-10s et, d'autre part, dans un mode DBR sans renégociation, pour un débit moyen $R_{mean}$ donné, la longueur maximale de la file nécessaire, inversement, pour une longueur moyenne $L_{mean}$ donnée souhaitée, le débit moyen $R_{mean}$ obtenu et, pour une longueur maximale $L_{max}$ souhaitée, le débit moyen $R_{mean}$ obtenu.

Ce tableau illustre l'intérêt qu'il y a à renégocier un contrat dans le cas de trafics sporadiques. On peut en effet constater que la renégociation permet d'économiser des ressources.

On notera que l'utilisation du procédé de l'invention n'est pas restreinte à l'interface utilisateur (en anglais User Network Interface UNI) mais peut se pratiquer à toutes les interfaces du réseau, comme par exemple l'interface entre réseau (NNI, Network Node Interface).

## Revendications

1. Procédé de renégociation, en cours d'une communication sur un réseau ATM, des paramètres du contrat de trafic concernant ladite communication, **caractérisé en ce qu'**il consiste:

   a) à prédire, pour une période de temps prédéterminée entre deux renégociations successives, l'ensemble des valeurs maximales de longueur qu'atteindrait une file virtuelle nourrie par le trafic de ladite communication pour un ensemble de valeurs constantes de débit de sortie de ladite file,
   b) à déduire desdites valeurs de longueur de file et desdites valeurs de débit correspondant, en fonction des paramètres de tolérance de gigue sur le trafic déclarée et/ou projetée dans le contrat de trafic avec le réseau, de nouveaux paramètres de contrat, tels que le débit-crête, le débit projeté et/ou le débit-crête maximum, selon le mode dudit contrat, et
   c) à renégocier avec le réseau sur la base dudit ou desdits paramètres du contrat de trafic pour ladite période de temps.

2. Procédé de renégociation selon la revendication 1, **caractérisé en ce que**, dans l'étape a), il consiste à ne prédire que la valeur de la longueur qu'atteindrait une file virtuelle nourrie par le trafic de ladite communication pour un unique débit donné de sortie de ladite file.

3. Procédé de renégociation selon la revendication 1 ou 2, **caractérisé en ce que** la renégociation de l'étape c) est effectuée dans un mode où le seul paramètre de contrat de trafic à renégocier est le débit-crête de cellules PCR, et en ce que, pour la déduction de l'étape b), ledit débit-crête est déterminé à l'aide de la relation suivante:

$$L_{max} (PCR) = to_{PCR} \times PCR$$

dans laquelle $to_{PCR}$ représente la tolérance gigue dans ledit mode et $L_{max} (PCR)$ la valeur maximale prédite de la longueur de ladite file virtuelle pour la valeur du débit de sortie égale à PCR.

4. Procédé de renégociation selon la revendication 1 ou 2, **caractérisé en ce que** la renégociation de l'étape c) est effectuée dans un mode où les paramètres de contrat de trafic sont, d'une part, le débit-crête de cellules PCR et, d'autre part, le débit projeté de cellules SCR, en ce que, pour la déduction de l'étape b), ledit débit-crête est déterminé à l'aide de la relation suivante:

$$L_{max} (PCR) = to_{PCR} \times PCR$$

et ledit débit projeté à l'aide de la relation suivante:

$$L_{max} (SCR) = to_{SCR} \times SCR$$

dans lesquelles $to_{PCR}$ représente la tolérance gigue pour ledit débit PCR dans ledit mode, $to_{SCR}$ représente la tolérance gigue pour ledit débit SCR dans ledit mode, $L_{max} (PCR)$ la valeur maximale prédite de la longueur de ladite file virtuelle pour la valeur du débit de sortie égale à PCR et $L_{max} (SCR)$ la valeur maximale prédite de la longueur de ladite file virtuelle pour la valeur du débit de sortie égale à SCR.

5. Procédé de renégociation selon la revendication 3 ou 4, **caractérisé en ce que** la renégociation de l'étape c) est effectuée dans un mode où les paramètres de contrat de trafic comportent le débit-crête PCR et le débit-crête maximal $PCR_{max}$, la plus petite valeur entre les deux valeurs desdits débits servant de base à ladite renégociation.

6. Procédé de renégociation selon une des revendications précédentes, **caractérisé en ce que** ladite étape a) de prédiction est réalisée à partir de la valeur prise par la longueur de la file virtuelle au moment de la renégociation, de la valeur prise par le débit en sortie de la file dans la période qui précède le moment de la renégociation et d'informations caractérisant le trafic dans au moins la période qui précède le moment de la renégociation.

7. Procédé de renégociation selon la revendication 6, **caractérisé en ce que** lesdites informations caractérisant le trafic sont obtenues en prenant en compte un nombre prédéterminé d'intervalles de temps consécutifs précèdant le moment de la renégociation et en déterminant, à l'intérieur de chaque intervalle de temps, la valeur prise par au moins une grandeur caractéristique du trafic, l'ensemble desdites valeurs ainsi obtenues formant lesdites informations.

8. Procédé de renégociation selon la revendication 6, **caractérisé en ce que** lesdites informations caractérisant le trafic sont obtenues en prenant en compte un nombre prédéterminé d'intervalles de temps consécutifs précédant le moment de la renégociation, en déterminant, à l'intérieur de chaque intervalle de temps, la valeur prise par au moins une grandeur caractéristique du trafic, l'ensemble des valeurs ainsi obtenues formant une série temporelle, et en déterminant les premiers moments de ladite série temporelle qui forment alors lesdites informations.

9. Procédé selon la revendication 8, **caractérisé en ce que** lesdits moments de ladite série temporelle qui sont utilisés sont la moyenne et la variance.

10. Procédé de renégociation selon la revendication 7, 8 ou 9, **caractérisé en ce que** ladite ou lesdites grandeurs caractéristiques du trafic est ou comprend le nombre de bits ou de cellules du trafic dans chaque intervalle de temps.

11. Procédé de renégociation selon la revendication 9 ou 10, **caractérisé en ce que** ladite ou lesdites grandeurs caractéristiques du trafic est ou comprend le temps d'arrivée entre deux cellules consécutives du trafic.

12. Procédé selon une des revendications précédentes, **caractérisé en ce qu'**on utilise, pour l'étape de prédiction, un réseau de neurones, ledit réseau de neurones comportant une cellule d'apprentissage destinée à lui fournir les poids de chacun de ses neurones après détermination desdits poids, ladite détermination étant effectuée sur une durée prédéterminée à partir du trafic de la connexion concernée.

**Claims**

1. Method of renegotiating, during a communication on an ATM network, traffic agreement parameters relating to said communication, **characterised in that** it consists in:

a) predicting, for a predetermined period of time between two successive renegotiations, the set of maximum length values which a virtual queue fed by the traffic of said communication would reach for a set of constant output rate values for said queue,

b) deducing from said queue length values and said corresponding rate values, depending on the jitter tolerance parameters on the declared and/or projected traffic in the traffic agreement with the network, new agreement parameters such as the peak rate, the projected rate and/or the maximum peak rate, according to the mode of said agreement, and

c) renegotiating with the network on the basis of said parameter or parameters of the traffic agreement for said period of time.

2. Renegotiation method according to claim 1, **characterised in that** in step a) it consists in only predicting the value of the length which a virtual queue fed by the traffic of said communication would reach for a single given output rate of said queue.

3. Renegotiation method according to claim 1 or 2, **characterised in that** the renegotiation of step c) is carried out in a mode in which the only traffic agreement parameter to be renegotiated is the peak cell rate PCR, and in that, for the deduction of step b), said peak rate is determined with the aid of the following relationship:

$$L_{max}(PCR) = to_{PCR} \times PCR$$

wherein $to_{PCR}$ represents the jitter tolerance in said mode and $L_{max}(PCR)$ the maximum predicted value of the length of said virtual queue for the value of the output rate equal to PCR.

4. Renegotiation method according to claim 1 or 2, **characterised in that** the renegotiation of step c) is carried out in a mode in which the traffic agreement parameters are, firstly, the peak cell rate PCR, and secondly, the projected cell rate SCR, in that, for the deduction of step b), said peak rate is determined with the aid of the following relationship:

$$L_{max}(PCR) = to_{PCR} \times PCR$$

and said projected rate with the aid of the following relationship:

$$L_{max}(SCR) = to_{SCR} \times SCR$$

wherein $to_{PCR}$ represents the jitter tolerance for said PCR rate in said mode, $to_{SCR}$ represents the jitter tolerance for said SCR rate in said mode, $L_{max}$(PCR) the maximum predicted value of the length of said virtual queue for the output rate value equal to PCR and $L_{max}$(SCR) the maximum predicted value of the length of said virtual queue for the output rate value equal to SCR.

5. Renegotiation method according to claim 3 or 4, **characterised in that** the renegotiation of step c) is carried out in a mode in which the traffic agreement parameters include the peak rate PCR and the maximum peak rate $PCR_{max}$, the smaller of the two values of said rates serving as the basis for said renegotiation.

6. Renegotiation method according to one of the preceding claims, **characterised in that** said prediction step a) is realised from the value assumed by the length of the virtual queue at the moment of the renegotiation, from the value assumed by the output rate of the queue in the period which precedes the moment of the renegotiation and from information characterising the traffic in at least the period preceding the moment of the renegotiation.

7. Renegotiation method according to claim 6, **characterised in that** said information characterising the traffic is obtained by taking into account a predetermined number of consecutive time intervals preceding the moment of the renegotiation and by determining, inside each time interval, the value assumed by at least one characteristic quantity of the traffic, the set of said values thus obtained forming said information.

8. Renegotiation method according to claim 6, **characterised in that** said information characterising the traffic is obtained by taking into account a predetermined number of consecutive time intervals preceding the moment of the renegotiation, by determining, inside each time interval, the value assumed by at least one characteristic quantity of the traffic, the set of values thus obtained forming a time series, and by determining the first moments of said time series which then form said information.

9. Method according to claim 8, **characterised in that** said moments of said time series which are used are the mean and the variance.

10. Renegotiation method according to claim 7, 8 or 9, **characterised in that** said characteristic quantity or quantities of the traffic is or includes the number of bits or of traffic cells in each time interval.

11. Renegotiation method according to claim 9 or 10, **characterised in that** said characteristic quantity or quantities of the traffic is or includes the arrival time between two consecutive traffic cells.

12. Method according to one of the preceding claims, **characterised in that** a neural network is used for the prediction step, said neural network including a learning cell intended to supply to it the weights of each of its neurons after determining said weights, said determination being carried out over a predetermined period from the traffic of the connection concerned.

## Patentansprüche

1. Verfahren zur erneuten Aushandlung der Parameter des eine Kommunikation auf einem ATM-Netz betreffenden Verkehrsvertrages während dieser Kommunikation, **dadurch gekennzeichnet, dass** es darin besteht:

   a) für einen vorher bestimmten Zeitraum zwischen zwei aufeinanderfolgenden erneuten Aushandlungen die Gesamtheit der Maximalwerte der Länge vorherzusagen, die eine durch den Verkehr der Kommunikation gespeiste virtuelle Schlange für eine Gesamtheit der konstanten Werte der Ausgangsrate dieser Schlange erreicht,
   b) aus den Werten der Schlangenlänge und den Werten der entsprechenden Rate in Abhängigkeit von den Parametern der im Verkehrsvertrag mit dem Netz angegebenen und/oder geplanten Jittertoleranz neue Vertragsparameter, wie die Spitzenrate, die geplante Rate und/oder die maximale Spitzenrate gemäß dem Modus des Vertrages herzuleiten, und
   c) mit dem Netz auf der Basis des oder der Parameter des Verkehrsvertrags für den Zeitraum erneut zu verhandeln.

2. Verfahren zur erneuten Aushandlung nach Anspruch 1, **dadurch gekennzeichnet, dass** es im Schritt a) darin besteht nur den Wert der Länge, den eine vom Verkehr der Kommunikation gespeiste virtuelle Schlange erreicht, für eine einzige gegebene Ausgangsrate der Schlange vorauszusagen.

3. Verfahren zur erneuten Aushandlung nach Anspruch 1 oder 2, **dadurch gekennzeichnet, dass** die erneute Aushandlung des Schritts c) in einem Modus durchgeführt wird, bei dem der einzige erneut auszuhandelnde Parameter des Verkehrsvertrages die Zellenspitzenrate PCR ist und dass für die Herleitung des Schrittes b) die Spitzenrate mit Hilfe der folgenden Beziehung bestimmt wird:

$$Lmax (PCR) = to_{PCR} \ x \ PCR$$

in welcher $to_{POR}$ die Jittertoleranz in diesem Modus und $L_{max}$ (PCR) der vorhergesagte Maximalwert der Länge der virtuellen Schlange für den Wert der Ausgangsrate gleich PCR darstellt.

4. Verfahren zur erneuten Aushandlung nach Anspruch 1 oder 2, **dadurch gekennzeichnet, dass** die erneute Aushandlung des Schritts c) in einem Modus durchgeführt wird, bei dem die Parameter des Verkehrsvertrages einerseits die Zellenspitzenrate PCR und andererseits die geplante Zellenrate SCR sind, und dass für die Herleitung des Schrittes b) die Spitzenrate mit Hilfe der folgenden Beziehung bestimmt wird:

$$L_{max} (PCR) = to_{PCR} \ x \ PCR$$

und die geplante Rate mit Hilfe der folgenden Beziehung bestimmt wird:

$$L_{max} (SCR) = to_{SCR} \ x \ SCR$$

in welchem $to_{PCR}$ die Jittertoleranz für die Rate PCR in diesem Modus, $to_{SCR}$ die Jittertoleranz für die Rate SCR in diesem Modus, $L_{max}$ (PCR) den vorhergesagten Maximalwert der Länge der virtuellen Schlange für den Wert der Ausgangsrate gleich PCR und $L_{max}$ (SCR) den vorhergesagten Maximalwert der Länge der virtuellen Schlange für den Wert der Ausgangsrate gleich SCR darstellt.

5. Verfahren zur erneuten Aushandlung nach Anspruch 3 oder 4, **dadurch gekennzeichnet, dass** die erneute Aushandlung des Schritts c) in einem Modus erfolgt, in dem die Parameter des Verkehrsvertrages die Spitzenrate PCR und die maximale Spitzenrate $PCR_{max}$ umfassen, wobei der kleinste Wert unter den beiden Werten der Raten als Basis für die erneute Aushandlung dient.

6. Verfahren zur erneuten Aushandlung nach einem der vorhergehenden Ansprüche, **dadurch gekennzeichnet, dass** der Schritt a) der Vorhersage ausgehend von dem Wert, der von der Länge der virtuellen Schlange zum Zeitpunkt der erneuten Aushandlung angenommen wird, von dem Wert, der von der Rate am Ausgang der Schlange in dem Zeitraum angenommen wird, der dem Zeitpunkt der erneuten Aushandlung vorhergeht, und von Informationen durchgeführt wird, die den Verkehr in wenigstens dem Zeitraum charakterisieren, der dem Zeitpunkt der erneuten Aushandlung vorhergeht.

7. Verfahren zur erneuten Aushandlung nach Anspruch 6, **dadurch gekennzeichnet, dass** die den Verkehr charakterisierenden Informationen erhalten werden, indem eine vorher bestimmte Anzahl von aufeinanderfolgenden Zeitintervallen berücksichtigt wird, die dem Zeitpunkt der erneuten Aushandlung vorhergehen, und indem in jedem Zeitintervall der von wenigstens einer charakteristischen Größe des Verkehrs angenommene Wert bestimmt wird, wobei die Gesamtheit der so erhaltenen Werte die Informationen bildet.

8. Verfahren zur erneuten Aushandlung nach Anspruch 6, **dadurch gekennzeichnet, dass** die den Verkehr charakterisierenden Informationen erhalten werden, indem eine vorher bestimmte Anzahl von aufeinanderfolgenden Zeitintervallen berücksichtigt wird, die dem Zeitpunkt der erneuten Aushandlung vorhergehen, indem in jedem Zeitintervall der von wenigstens einer charakteristischen Größe des Verkehrs angenommene Wert bestimmt wird, wobei die Gesamtheit der so erhaltenen Werte eine zeitliche Folge bildet und indem die ersten Momente der zeitlichen Folge bestimmt werden, die dann die Informationen bilden.

9. Verfahren nach Anspruch 8, **dadurch gekennzeichnet, dass** die Momente der zeitlichen Folge, die verwendet werden, der Mittelwert und die Varianz sind.

10. Verfahren zur erneuten Aushandlung nach Anspruch 7, 8 oder 9, **dadurch gekennzeichnet, dass** die charakteristische(n) Größe oder Größen des Verkehrs die Anzahl der Bits oder der Zellen des Verkehrs in jedem Zeitintervall ist oder umfasst.

11. Verfahren zur erneuten Aushandlung nach Anspruch 9 oder 10, **dadurch gekennzeichnet, dass** die charakteristische(n) Größe oder Größen des Verkehrs die Laufzeit zwischen zwei aufeinanderfolgenden Zellen des Verkehrs ist oder umfasst.

12. Verfahren nach einem der vorhergehenden Ansprüche, **dadurch gekennzeichnet, dass** für den Vorhersageschritt wird ein Neuronennetz verwendet wird, wobei das Neuronennetz eine Lernzelle aufweist, die dazu bestimmt ist, ihm die Gewichtungen jeder seiner Neuronen nach Bestimmung dieser Gewichtungen zur Verfügung zu stellen, wobei diese Bestimmung über eine vorher bestimmte Dauer ausgehend vom Verkehr der betroffenen Verbindung erfolgt.

FIG.1a

FIG.1b

FIG. 2

FIG. 3

rate using an oracle with DBR-10s ——
rate using a predictor with DBR-10s -----

## FIG.4

rate using an oracle with SBR-10s ——
rate using a predictor with SBR-10s -----

## FIG.5a

maximum queue size using an oracle with SBR-10s ——
maximum queue size using a predictor with SBR-10s -----

## FIG.5b

| pour obtenir | Ressources nécessaires... | |
| --- | --- | --- |
| | avec DBR-10s | avec DBR sans renégociation |
| $R_{mean} = 0.9$ Mb/s | $L_{max} = 0.4$ Mb | $L_{max} = 23.1$ Mb |
| $L_{mean} = 0.09$ Mb | $R_{mean} = 0.9$ Mb/s | $R_{mean} = 5.5$ Mb/s |
| $L_{max} = 0.4$ Mb | $R_{mean} = 0.9$ Mb/s | $R_{mean} = 3.7$ Mb/s |

# FIG. 6